## Europäisches Patentamt

## European Patent Office

## Office européen des brevets

(11) Veröffentlichungsnummer: **0 302 502**
**A2**

## EUROPÄISCHE PATENTANMELDUNG

(21) Anmeldenummer: **88112732.8**

(22) Anmeldetag: **04.08.88**

(51) Int. Cl.4: **H04B 3/36**

(30) Priorität: **07.08.87 DE 3726358**

(43) Veröffentlichungstag der Anmeldung:
**08.02.89 Patentblatt 89/06**

(84) Benannte Vertragsstaaten:
**BE DE FR GB IT NL SE**

(71) Anmelder: **Siemens Aktiengesellschaft Berlin und München**
**Wittelsbacherplatz 2**
**D-8000 München 2(DE)**

(72) Erfinder: **Giebel, Wolfgang, Dipl.-Ing.(FH)**
**Bergmoserstrasse 5**
**D-8035 Gauting(DE)**
Erfinder: **Oestreich, Ulrich, Dipl.-Ing.**
**Karl-Witthalm-Strasse 15**
**D-8000 München 70(DE)**

(54) **Anordnung zum Anschluss eines Zwischenverstärkers für Seekabel.**

(57) Anordnung zum Anschluß eines Zwischenverstärkers (ZV) für Seekabel, bei dem der Zwischenverstärker (ZV) in die Signalleitungen eines Hauptkabels (HK) eingeschleift und an Versorgungsleitungen angeschlossen ist. Über ein vom Hauptkabel (HK) abzweigendes Nabelschnurkabel (NSK) ist der Zwischenverstärker (ZV) eingeschleift.

FIG 1

EP 0 302 502 A2

## Anordnung zum Anschluß eines Zwischenverstärkers für Seekabel

Die Erfindung betrifft eine Anordnung zum Anschluß eines Zwischenverstärkers für Seekabel, bei dem der Zwischenverstärker in die Signalleitungen eines Hauptkabels eingeschleift und an Versorgungsleitungen angeschlossen ist.

Bei der Übertragung von Signalen über große Entfernungen mittels eines Seekabels, insbesondere in Lichtwellenleitertechnik, ist der Einsatz von Zwischenverstärkern unbedingt erforderlich, um die Signale in bestimmten Abständen wieder zu regenerieren. Die bisherige Seekabeltechnik sieht für diese Zwischenverstärker partiell flexible druckfeste Muffengehäuse vor, die in das zu versorgende Seekabel zugfest, druckfest und mit geeigneter Isolierung für den Stromleiter (Versorgungsleitung) eingespleißt werden. Diese seit Jahren unveränderte Technik hat zwar den Vorteil, Zwischenverstärker und Kabel als Einheit verlegen zu können, aber den gravierenden Nachteil, bei erforderlichen Reparaturen am Zwischenverstärker diesen zusammen mit dem am Meeresboden verlaufenden Kabel heben zu müssen. Darüberhinaus zwingt sie dazu, den Verstärker kompakt und flexibel zu bauen, so daß sehr schwierige und aufwendige Entwicklungen nötig werden, um ihn in die nötige längliche raumsparende Form zu bringen. Insbesondere bei Verstärkern für optische Systeme ist mit einer begrenzten Lebensdauer der sendenden Laserdiode zu rechnen, die Wartungsarbeiten an den Zwischenverstärkern erfordern wird. Andererseits wächst der Verstärkerabstand ständig mit der Entwicklung fallender Faserdämpfungen und steigender Diodensendeleistung, so daß die Ausnutzung der Sendediode zwar höher wird, aber der gesamte Wartungsaufwand eher sinkt.

Der Erfindung liegt die Aufgabe zugrunde, einen am Meeresgrund befindlichen Zwischenverstärker in einfacher Weise für Wartungs- und Reparaturzwecke zugänglich zu machen.

Dies wird bei einer Anordnung der eingangs genannten Art dadurch gelöst, daß ein vom Hauptkabel über ein Verbindungsglied abzweigendes Nabelschnurkabel für die Einschleifung des Zwischenverstärkers angeordnet ist.

Da der Zwischenverstärker nicht direkt im Hauptkabel integriert bzw. in diesem eingespleißt ist, sondern in ein vom Hauptkabel über ein Verbindungsglied abzweigendes Nabelschnurkabel eingeschleift ist, kann der Zwischenverstärker für Wartungszwecke gehoben werden, ohne das Hauptkabel mit heben zu müssen. Da das Hauptkabel dabei am Meeresboden verbleibt, können Wartungsarbeiten am Zwischenverstärker in einfacher Weise durch bloßes Heben des Nabelschnurkabels durchgeführt werden.

Gemäß einer vorteilhaften Ausgestaltung der Erfindung weist das Verstärkergehäuse eine beliebig gestaltete topfartige Form auf. Dadurch wird eine von den Abmessungen des Hauptkabels unabhängige und einfachere Konstruktion des Zwischenverstärkers ermöglicht.

Weitere vorteilhafte Weiterbildungen der Erfindung sind in den Unteransprüchen wiedergegeben.

Die erfindungsgemäße Anordnung sowie deren Weiterbildungen werden nachfolgend anhand von Zeichnungen näher erläutert. Es zeigen

Fig. 1 eine Anordnung nach der Erfindung mit Hauptkabelverbindungsglied, Nabelschnurkabel und Zwischenverstärker in schematischer Darstellung,

Fig. 2 die Verlegung eines Seekabels mit der erfindungsgemäßen Anordnung in schematischer Darstellung.

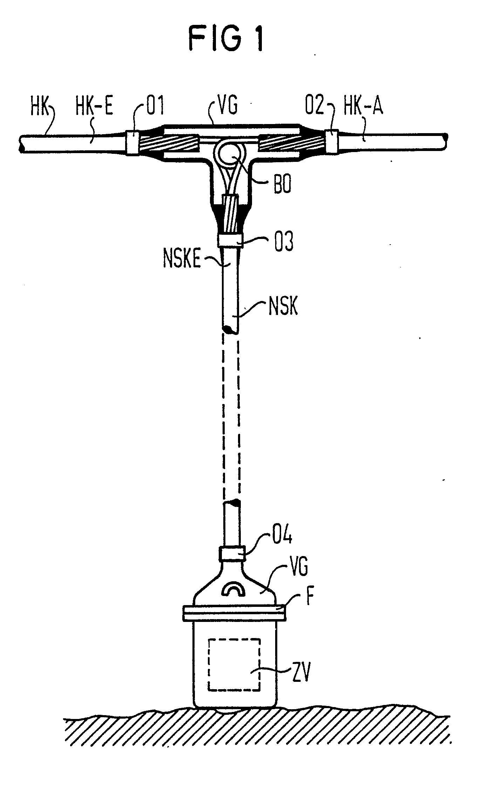

Fig. 1 zeigt ein an einem Verbindungsglied VG angeschlossenes Seekabel SK, sowie ein von diesem Verbindungsglied VG abzweigendes Nabelschnurkabel NSK, an dessen Ende ein den Zwischenverstärker ZV beinhaltendes topfartiges druckfestes Verstärkergehäuse VG befestigt ist. Das Verbindungsglied VG ist als flache zug- und druckfeste Abzweigmuffe, insbesondere in Form eines T-Gliedes, ausgebildet. Das Verbinden des Hauptkabels HK mit einem zug- und druckfesten T-Gehäuse ist einfacher als mit einer eingespleißten flexiblen Muffe, da die reine Verbindungsmuffe kurz ist und daher starr gehalten werden kann. Es ist möglich, ein starres T-förmiges Gehäuse zu verwenden und dieses druckfest auszugießen. Die zwei in einer Achse liegenden Öffnungen 01 und 02 der Abzweigmuffe nehmen den Hauptkabeleingang HK-E bzw. Hauptkabelausgang HK-A des Hauptkabels HK zugfest auf. Die quer oder schräge zu dieser Achse liegende Öffnung 03 dient zur zugfesten Aufnahme eines Endes NSKE des Nabelschnurkabels NSK. Die Kopplung des Hauptkabels HK sowie des Nabelschnurkabels NSK an die Abzweigmuffe erfolgt desweiteren derart, daß sich eine Undurchlässigkeit gegenüber dem umgebenden Medium, insbesondere Wasser, ergibt. Die in die Abzweigmuffe einlaufenden, abgedichteten Enden HK-E,HK-A und NSKE des Hauptkabels HK bzw. des Nabelschnurkabels NSK sind innerhalb der Abzweigmuffe von ihrem äußeren Schutzmantel befreit. Die Signal- und Versorgungsleitungen des Hauptkabeleingangs HK-E werden dabei über einen in der Mitte der Abzweigmuffe befindlichen Bolzen BO in das Nabelschnurkabel NSK umgelenkt und durch dieses zum Zwischenverstärker ZV geführt. Die von diesem abgehenden Signal- und Versorgungsleitungen durchlaufen wiederum das Nabelschnurkabel NKS und gelangen in der Abzweigmuffe nach Führung über den mittigen Bolzen BO in den Hauptkabelausgang HK-A. Das Nabelschnurkabel NSK enthält somit alle ein- und ausgehenden Signal- und Versorgungsleitungen, d.h. es wird vom Lichtsignal und vom Versorgungsstrom zweimal durchlaufen. Setzt man einen Stromwandler in die Abweigmuffe, kann der Aufwand an Kupfer und Isolierung im Nabelschnurkabel stark reduziert werden. Das den Zwischenverstärker ZV schützende Verstärkergehäuse VG kann als beliebig gestalteter druckfester Topf ausgebildet sein, der sich den Abmessungen des Nabelschnurkabels NSK kaum anzupassen braucht. Auf diese Weise wird die Konstruktion des Zwischenverstärkers ZV erheblich vereinfacht, da keine formbestimmenden Gehäuse verwendet werden müssen. Das in das Verstärkergehäuse VG einlaufende Ende des Nabelschnurkabels NSK ist zug- und druckfest sowie wasserundurchläs ig mit der Eingangsöffnung 04 des Verstärkergehäuses VG verbunden. Das abgedichtete Verstärkergehäuse besitzt einen mittigen Öffnungsflansch F, um bei Wartungs- und Reparaturarbeiten den Zwischenverstärker problemlos freilegen zu können. Die Länge des als zugfestes Spezialkabel ausgebildeten Nabelschnurkabels NSK entspricht mindestens der größten auftretenden Verlegetiefe. Der Querschnitt der im Nabelschnurkabel NSK verlaufenden Versorgungsleitungen kann dabei geringer als der im Hauptkabel HK verlaufenden sein, da die Länge des Nabelschnurkabels NSK äußerstenfalls 7500 m beträgt.

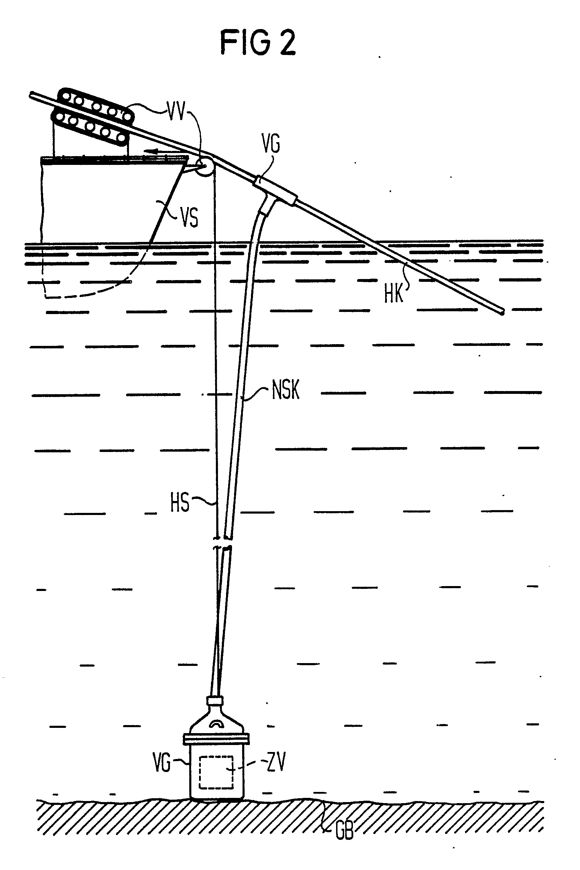

In Fig. 2 ist eine Verlegemöglichkeit der erfindungsgemäßen Anordnung von Hauptkabel HK und den über das Verbindungsglied VB angeschlossene Nabelschnurkabel NSK mit angeschlossenem Zwischenverstärker ZV dargestellt. Beim Verlegen wird dabei so vorgegangen, daß das Hauptkabel HK mit dem Verbindungsglied VG durch die Verlegevorrichtung VV (Raupe) gefahren wird. Dann wird ohne Fahrt des Verlegeschiffes VS der Zwischenverstärker ZV mit dem Nabelschnurkabel NSK auf den Grundboden GP gelassen. Sobald der Zwischenverstärker ZV auf dem Grundboden GB liegt, nimmt das Verlegeschiff VS seine Fahrt zur weiteren Verlegung des Hauptkabels HK wieder auf. Es ist zweckmäßig, am Verstärkergehäuse VG ein Hilfsseil HS zu befestigen, dessen Länge etwa der Verlegetiefe entspricht. Am fernen Ende des Hilfsseiles HS kann eine schwimmfähige Markierung befestigt sein, die ein Auffinden des Zwischenverstärker ZV erleichtert. Vorteilhafterweise kann als Markierung eine schwimmfähige Boje verwendet werden, wobei je nach Länge des Hilfsseiles HS ein Auffinden über oder unter Wasser möglich ist. Durch diese Anordnung wird das Auffinden des Zwischenverstärkers ZV in einfacher Weise ermöglicht und der Zwischenverstärker ZV kann für Wartungszwecke gehoben werden, ohne das Hauptkabel HK mit heben zu müssen.

## Ansprüche

1. Anordnung zum Anschluß eines Zwischenverstärkers (ZV) für Seekabel, bei dem der Zwischenverstärker (ZV) in die Signalleitungen eines Hauptkabels (HK) eingeschleift und an Versorgungsleitungen angeschlossen ist,
**dadurch gekennzeichnet,**
daß ein vom Hauptkabel (HK) über ein Verbindungsglied (VG) abzweigendes Nabelschnurkabel (NSK) für die Einschleifung des Zwischenverstärkers (ZV) angeordnet ist.

2. Anordnung nach Anspruch 1,
**dadurch gekennzeichnet,**
daß der Zwischenverstärker (ZV) am entfernten Ende des Nabelschnurkabels (NSK) in einem druckfesten Verstärkergehäuse (VG) untergebracht ist.

3. Anordnung nach Anspruch 2, **dadurch gekennzeichnet,** daß das entfernte Ende des Nabelschnurkabels (NSK) zugfest mit dem abgedichteten Verstärkergehäuse (VG) verbunden ist.

4. Anordnung nach Anspruch 2 oder 3,
**dadurch gekennzeichnet,**
daß das Verstärkergehäuse (VG) eine beliebig gestaltete topfartige Form aufweist.

5. Anordnung nach einem der vorhergehenden Ansprüche,
**dadurch gekennzeichnet,**
daß das Nabelschnurkabel (NSK) als zugfestes Spezialkabel ausgebildet ist, dessen Länge mindestens einer größten auftretenden Verlegetiefe entspricht.

6. Anordnung nach einem der vorhergehenden Ansprüche,
**dadurch gekennzeichnet,**
daß das Nabelschnurkabel (NSK) alle ein- und ausgehenden Signalleitungen sowie die ein- und ausgehenden Versorgungsleitungen enthält.

7. Anordnung nach einem der vorhergehenden Ansprüche,
**dadurch gekennzeichnet,**
daß das Verbindungsglied (VG) als eine zug- und druckfeste Abzweigmuffe, insbesondere in Form eines T-Gliedes, ausgebildet ist.

8. Anordnung nach Anspruch 7,
**dadurch gekennzeichnet,**
daß die Abzweigmuffe zwei in einer Achse liegende Öffnungen (01 - 02) zur Aufnahme eines Hauptkabeleingangs (HK-E) bzw. Kabelausgangs (HK-A), sowie eine quer zu dieser Achse liegende Öffnung (03) zur Aufnahme des Nabelschnurkabels (NSK) aufweist.

9. Anordnung nach Anspruch 7 oder 8,

**dadurch gekennzeichnet,**

daß das Hauptkabel HK sowie das Nabelschnurkabel (NSK) zugfest und für das umgebende Medium, insbesondere Wasser, undurchlässig mit der Abzweigmuffe verbunden sind.

10. Anordnung nach einem der Ansprüche 7 - 9,

**dadurch gekennzeichnet,**

daß die innerhalb der Abzweigmuffe verlaufenden Signal- und Versorgungsleitungen von der Bewehrung des Hauptkabels (HK) befreit sind.

11. Anordnung nach einem der Ansprüche 7 - 10,

**dadurch gekennzeichnet,**

daß die Abzweigmuffe mit Silikonharz oder PV-Harz druckfest ausgegossen ist.

12. Anordnung nach einem der vorhergehenden Ansprüche,

**dadurch gekennzeichnet,**

daß ein Hilfsseil (HS) mit Markierung zur Auffindung des Zwischenverstärkers (ZV) am Verstärkergehäuse (VG) angebracht ist.

13. Anordnung nach Anspruch 12,

**dadurch gekennzeichnet,**

daß die Markierung als schwimmfähige Boje am Ende des Hilfsseils (HS) ausgebildet ist.

# FIG 1

FIG 2